# EUROPEAN PATENT APPLICATION

(11) **EP 1 187 013 A2**
(43) Date of publication of application: **13.03.2002**
(21) Application number: 01109759.9
(22) Date of filing: 20.04.2001
(51) Int. Cl.: G06F 9/45

(54) **Compiler optimization**

(30) Priority: 20.04.2000 JP 2000119594
(71) Applicant: NEC CORPORATION, Tokyo (JP)
(72) Inventor: Bader, Miles Gordon, c/o NEC Corporation, Tokyo (JP)
(74) Representative: Glawe, Delfs, Moll & Partner

(57) **Abstract**

The usual formulation of the compiler representation known as 'SSA-form' can only handle local variables. It is desirable to extend this to allow other locations to be represented. Therefore, this invention adds synchronization operations that allow the efficient use of SSA form for non-local memory locations in the presence of possible aliasing.

## Description

### BACKGROUND OF THE INVENTION

### Field of the Invention

The present invention relates to Compiler Optimization.

### Description of the Related Art

This technique is related to an extension of the usual formulation of Static Single Assignment (SSA) form.

Briefly, 'SSA form' is an alternative representation for variables in a program, in which any given variable is only assigned at a singe location in the program. A program is transformed into SSA form by a process called 'SSA conversion'. The SSA conversion replaces every local variable in the source program with a set of new variables, called 'SSA variables', each of which is only assigned to at a single physical location in the program; thus, every point at which a source variable V is assigned to in the source program, the corresponding SSA-converted program will instead assign a unique variable, V' 1, V'2, etc.

At any point in the program (always at the start of a basic-block) where the merging of control flow would cause two such derived variables to be live simultaneously, their values are merged together to yielding a single new SSA variable, e.g., V'3, that represents the value of the original source variable at that point. This merging is done using a 'phi-function'. The 'phi-function' is an instruction which has as many inputs as there are basic-blocks that can transfer control to the basic-block it is in, and chooses whichever input corresponds to the basic-block that preceded the current one in the dynamic control flow of the program.

The SSA form is convenient because it allows variables to be treated as values, independent of their location in the program, making many transformations more straight-forward, as they don't need to worry about the implicit constraints imposed by using single variable names to represent multiple values, depending on the location in the program. These properties make it a very useful representation for an optimizing compiler and many optimization techniques become significantly simpler if the program is described in the SSA form.

For instance, in a traditional compiler, a simple common sub-expression-elimination algorithm that operates on variables must carefully guard against the possibility of redefinition of variables, so that it generally is only practical to use within a single basic block. However, if the program is in the SSA form, this simple optimization need not worry about redefinition at all, variables can't be redefined, and furthermore will work even across basic block boundaries.

The SSA conversion, as described above, is a transformation that is traditionally applied only to a function's local variables; this makes the process much easier, as local variables are subject to various constraints. For instance one knows that local variables are not aliased to other local variables, and unless its address has been taken, that a local variable will not be modified by a function other than the one it is declared in.

However, there are many cases where 'active values', which one would like to receive the benefits of optimizations made possible by using the SSA form, exist in storage locations other than local variables. In this case, one would like to have the object's fields receive the same treatment as if they were a local variable, which could yield optimizations.

Information about the SSA form can be found in the paper as [SSAFORM] entitled "Efficiently computing Static Single Assignment Form and the Control Dependence Graph", by Ron Cytron et al., ACM TOPLAS, Vol. 13, No. 4, October 1991, pages 451-490.

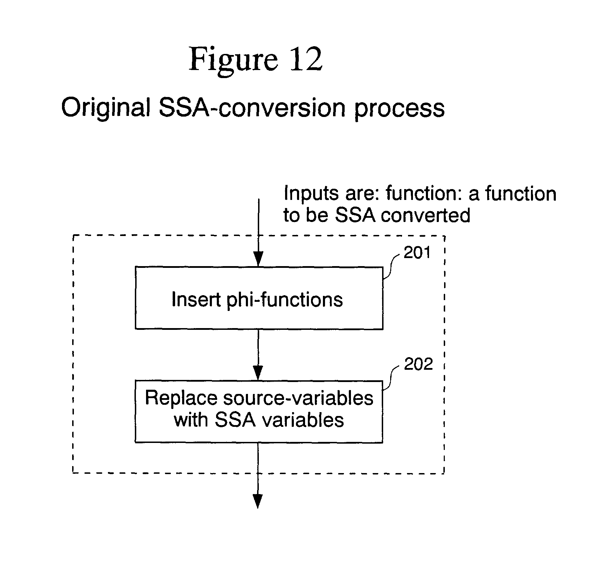

The SSA conversion process in [SSAFORM] is performed in two steps as shown in Figure 12.
(a) (201) Phi functions are inserted at any place in the function where multiple definitions of the same non-SSA variable may be merged. The phi-functions produce a new definition of the variable at the point where they are inserted.
   Because of this step, there is only one extant definition of a source variable at any point in the program.
(b) (202) Every non-SA variable definition is replaced by a definition of a unique SSA-variable, and every non-SSA variable reference replaced by a reference to an appropriate SSA-variable, because of the insertion of phi-functions, there will always be a single extant SSA-variable corresponding to a given non-SSA variable.

An extension of SSA form to non-local locations is described in: [SSAMEM] "Effective Representation of Aliases and Indirect Memory Operations in SSA Form", by Fred Chow et al., Lecture Notes in Computer Science, Vol. 1060, April 1996, pages 253-267.

The concept of basic-block 'dominance' is well known, and can be described as follows: A basic block A 'dominates' a basic black B, if the flow of control can reach B only after A (although perhaps not immediately; other basics blocks may be executed between them).

If A dominates B and no other block dominates B that doesn't also dominate A, then A is said to be B's 'immediate dominator'.

It is desirable lo extend the use of SSA form to handle non-local memory locations. However, a straight-forward implementation given the prior art, which synchronizes SSA representations at every point of unknown behavior, can be very inefficient, because there are many operations that may read or write almost *any* memory location (for instance, in the case of library function calls, where the compiler often has no information about their behavior). Using such a simple technique also causes many extra phi-functions to be introduced, which can dramatically increase the cost of using SSA form.

This invention attempts to use SSA form on non-local memory locations, without excessive overhead for common program structures, by consolidating memory synchronization operations where possible.

### SUMMARY OF THE INVENTION

In this invention, we modify the procedure of [SSAFFORM], which is shown in Figure 12, as follows:

### Method for representing pointer variables in SSA form in step (452)

+ References or definitions of memory locations resulting from pointer-dereferences are also treated as 'variables', here called 'complex variables' shown in (452), in addition to simple variables (451), such as those used in the source program. Complex variables consist of a pointer variable and an offset from the pointer. An example of a complex variable is the C source expression (value) '*P', as used in (810) and (820).

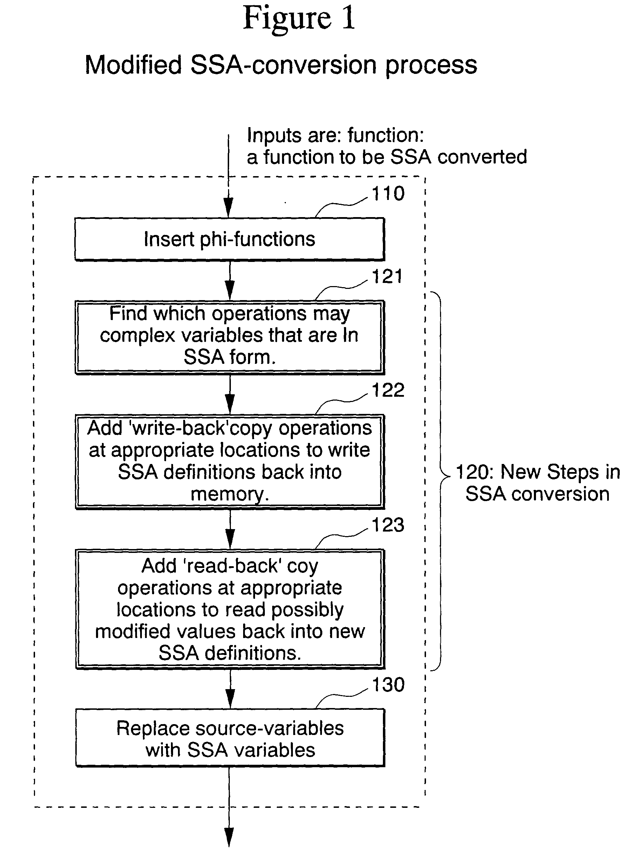

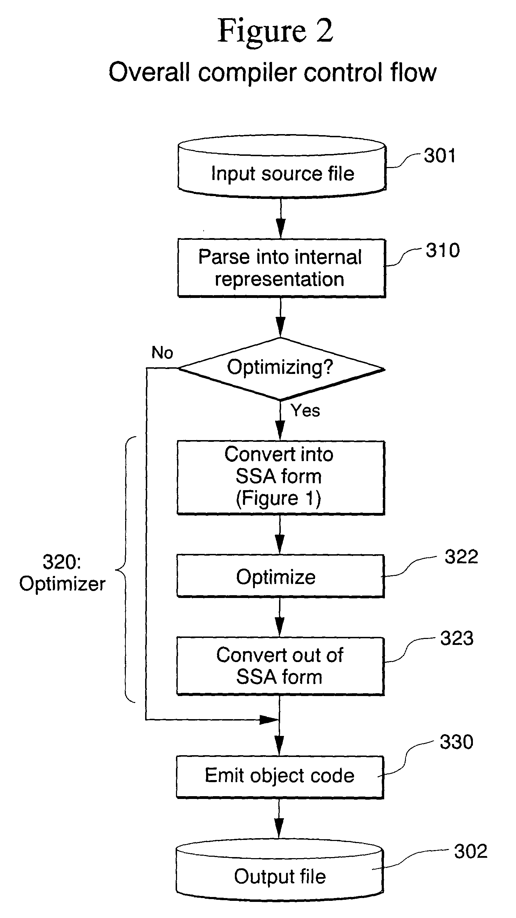

Method for adding appropriate copy operations to synchronize complex variables (452) with the memory location they represent in Figure 1. +These 'complex variables' (452) are treated as non-SSA variables during SSA-conversion shown in Figure 1 (any variable reference within a complex variable is treated as a reference in the instruction (440) that contains the complex variable (452)).

+A new step (120) is inserted in the SSA-conversion process as shown in Figure 1 between steps (a) (110) and (b) (130), to take care of any necessary synchronization of SSA-converted complex variables (452) with any instructions (440) that have unknown side-effects:
(a') (121) To any instruction (440) that may have unknown side-effects on an 'active' complex variable (452) -- one that is defined by some dominator of the instruction -- add a list of the variable, and the possible side effects (may_read, may_write).
(122, 123) Next, insert special copy operations, called write-backs (521) (which write an SSA variable back to its real location) and read-backs (which define a new SSA variable from a variable's real location), to make sure the SSA-converted versions of affected variables (450) correctly synchronized with respect to such side-effects. This step may also insert new phi-functions, in the case where copying back a complex variable (452) from it's synchronizatian location may define a new SSA version of that variable.

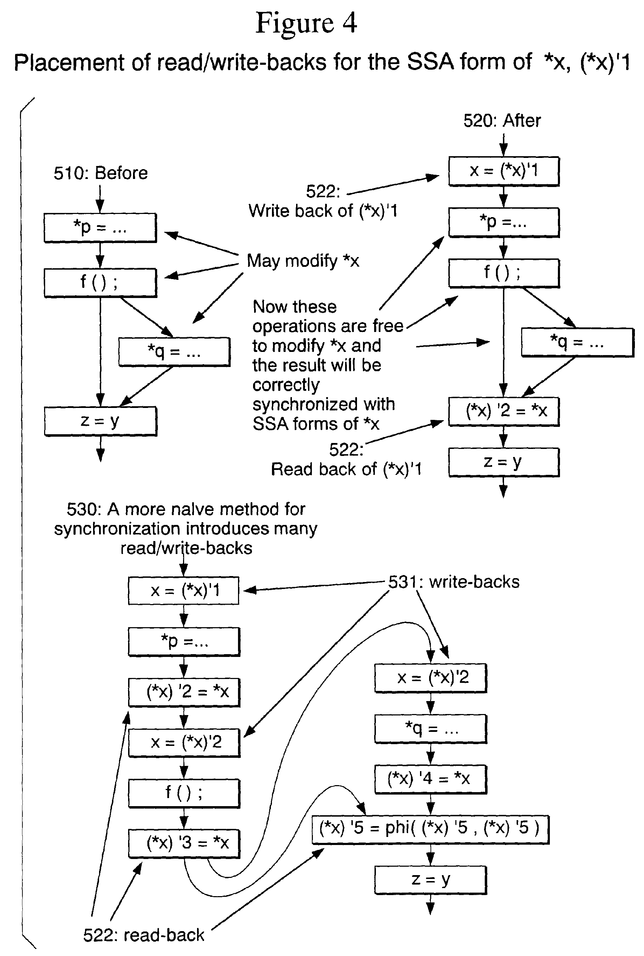

For an example of adding write-backs (521) and read-backs (522), as seen in Figure 4.

The present invention has an effect that the present invention adds synchronization operations that allows the efficient use of SSA-form for non-local memory locations in the presence of the possible aliasing.

### BRIEF DESCRIPTION OF THE DRAWINGS

Figure 1 shows general form of the SSA-conversion process used by this invention.
Figure 2 shows overall compiler control flow.
Figure 3 shows basic data structures used in describing this invention.
Figure 4 shows placement of variable read- and write-backs.
Figure 5 shows the control flow of the procedure for steps (a'.I) and (a'.II) of the modified SSA conversion process, adding variable synchronization information to instructions and adding variable write-backs to a function, 'add_syncs_and_write_backs'.
Figure 6 shows the control flow of the procedure for step (a'.III) of the modified SA conversion process, adding variable read-backs to a function.
Figures 7A and 7B show the control flow for a subroutine used by step (a' .III) of the modified SSA conversion process, 'add_merged_read_backs'.
Figure 8 shows example source program.
Figure 9 shows SSA converted program, with simple implementation of read-backs.
Figure 10 shows SSA converted program, with the implementation of read-backs described in this patent.
Figure 11 shows register-allocated and SSA-unconverted program.
Figure 12 shows general farm of the traditional SSA-conversion process.

### DETAILED DESCRIPTION OF THE INVENTION

This invention is an addition to a compiler for a computer programming language, whose basic control flow is illustrated in Figure 2.

A source program (301) is converted into an internal representation by a parser (310), and if optimization is enabled, the internal representation is optimized by the optimizer (320). Finally, the internal form is converted into the final object code (302) by the backend (330). In a compiler that uses SSA form, the optimizer usually contains at least three steps: conversion of the program from the 'pre-SSA' internal representation into an internal representation that uses SSA form shown in Figure 1, optimization of the program in SSA form (322), and conversion of the program from SSA form to an internal representation without SSA form (323). Usually SSA form differs from the non-SSA internal representation only in the presence of additional operations, and certain constraints on the representation; see [SSAFORM] for details.

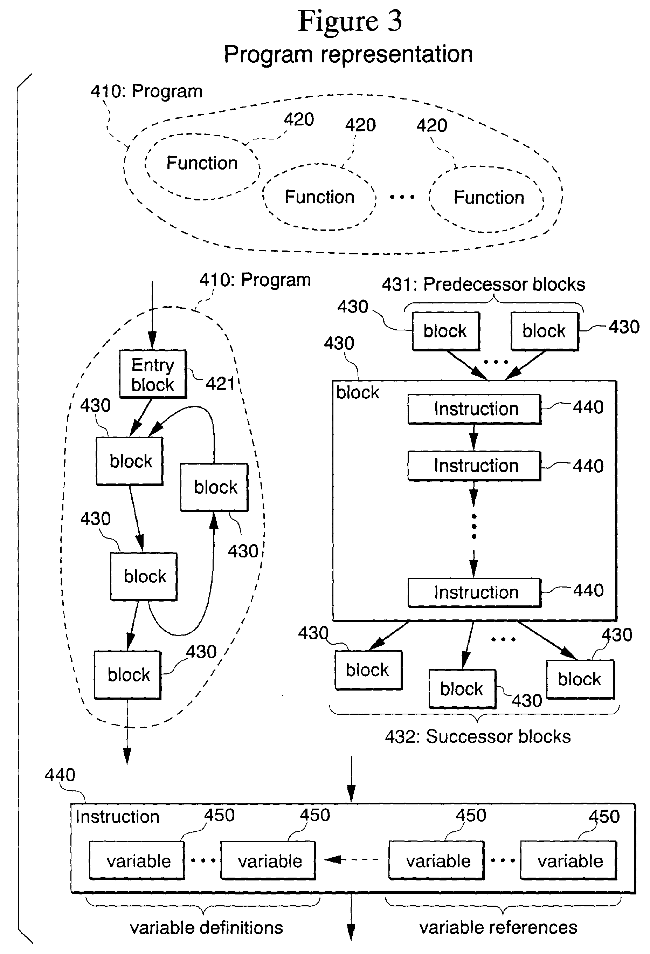

The preferred internal representation of a program used is as follows as shown in Figure 3.

A program (410) is a set of functions.

A function (420) is a set of'blocks' (430), roughly corresponding to the common compiler concept of a 'basic block'. A flow graph is a graph where the vertices are blocks (430), and the edges are possible transfers of control-flow between blocks (430). A single block (430) is distinguished as the 'entry block' (421), which is the block in the function executed first when the function is called.

Within a block (430) is a sequence of'instructions' (440), each of which describes a simple operation. Within a block (430), control flow moves between instructions (440) in the same order as their sequence in the block; conditional changes in control flow may only happen by choosing which edge to follow when choosing the successor block (432) to a block, so if the first instruction (440) in a block is executed, the others are as well, in the same sequence that they occur in the block (430).

An instruction (440) may be a function call, in which case it can have arbitrary side-effects, but control-flow must eventually return to the instruction (440) following the function call.

An instruction (440) may explicitly read or write 'variables' (450), each of which is either a 'simple variable' (451), such as a local or global variable in the source program (or a temporary variable created by the compiler), or a 'complex variable' (452), which represents a memory location that is indirectly referenced through another variable. Each variable has a type, which defines what values may be stored in the variable.

Complex variables (452) are of the form '*(BASE + OFFSET)', where BASE (453) is a variable (450), and OFFSET (454) is a constant offset; this notation represents the value stored at memory location (BASE + OFFSET).

Because of the use of complex variables (452), there are typically no instructions (440) that serve to store or retrieve values from a computed memory location. Instead, a simple copy where either the source or destination, or both, is a complex variable (452) is used. Similarly, any other instruction (440) may store or retrieve its results and operands from memory using complex variables.

To assist in program optimization, each function is converted to SSA-form, which is described in (Description of the Related Art) section, as modified for this invention, described in (description of the Related Art) section. This conversion is called SSA-conversion, and takes place in 3 steps as shown in Figure 1, (a), (a'), and (b).

(a) (110) Phi functions are inserted at any place in the function where multiple definitions of the same variable may be merged, as described in [SSAFORM]. The phi-functions produce a new definition of the variable at the point where they are inserted. For example, the Phi function (910) is inserted to merge the different values written to the complex variable '*P' at (911) ((820) in the input program) and (912) ((830) in the input program), and also at (1010), merging the values defined at (1011) ((820) in the input program) and (830) in the input program.

Because of this step, there is only one extant definition of a source variable at any point in the program.

(a') I. (121) For each operation, determine which 'active' complex variables (452) it may have unknown side-effects on, and list attach a note to the operation with this information. These notes are referred to below as 'variable syncs'. In the example program, instructions (1020), (1021), (1022), and (1023) may possibly read or modify '*P', (as we don't have any information about them).

II. (122) At the same time, add any necessary write-back copy operations (521) write back any complex variables (452) to their 'synchronization location', which is the original non-SSA variable (which, for complex variables (452), is a memory location), and mark the destination or the copy operation as such (this prevents step (b) of SSA conversion from treating the destination of the copy as a new SSA definition). Any such 'write-back' (521) makes the associated variable inactive, and so prevents any further write-backs (521) unless the variable is once again defined.

III. (123) Add necessary read-backs, to supply new SSA definitions of complex variables (452) that have been invalidated (after having been written back to their synchronization location).

This is done by essentially solving a data-flow problem, where the values are 'active read-backs', which are:
+ Defined by operations that may modify a complex variable (452), as located in step 1 above, or by the merging of multiple active read-backs of the same variable (450], at control-now merge points. In the example, all the function call may possibly modify '*P', so they must be represented by read-backs at (1020), (1021), (1022), and (1024).
+ Referenced by operations that use the value of a complex variable with an active read-back, or reaching a control-flow merge point at which no other read-backs of that variable are active (because such escaped definitions must then be merged with any other values of the complex variable using a phi-function).

Only read-backs that are referenced must actually be initiated. In the example program, the only instantiated read-back is at (1030). The reference that causes instantiation is the assignment of '*P' to the variable 'x', at (840) in the source program; in the SSA-converted program, this assignment is split between the read-back at (1030) and the phi function at (1031).
+ Killed by definitions of the associated complex variable (452), or by a new read-back of the variable. In the example, the read-back defined at (1021) is killed because the following function call defines a new read-back of the same variable at (1022).
+ Merged, at control-flow merge points, with other active read-backs of the same variable (450), resulting in a new active read-back of the same variable. In the example, a 'merge read-back' is defined at (1030), merging the read-backs of '*P' at (1022) and (1023).

After a fixed-point of read-back definitions is reached, those that are referenced are instantiated by inserting the appropriate copy operation at the place where they are defined, to copy the value from the read-back variable (450)'s synchronization location into a new SSA variable; if necessary new phi-functions may be inserted to reflect this new definition pint. As mentioned above, in the example this only happens at (1030).

Steps (a'.I) (121) and (a'.II) (122) take place as follows:

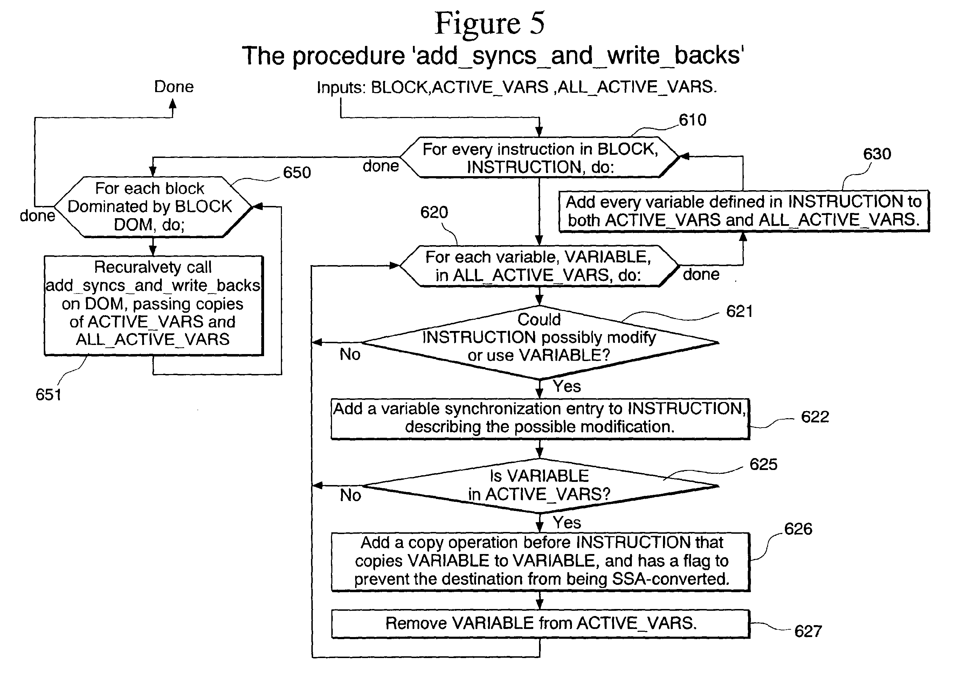

Call the procedure 'add_syncs_and_write_backs' shown in Figure 5 on the function's entry block (430), initializing the ACTIVE_VARIABLES and ALL_ACTIVE_VARIABLES parameters to empty lists.

The procedure 'add_syncs_and_write_backs', with arguments BLOCK, ACTIVE_VARIABLES, and ALL_ACTIVE_VARIABLES is defined as follows as shown in Figure 5.
(610) For every instruction (440) in the BLOCK, do:
(620) For each VARIABLE in ALL_ACTIVE_VARIABLES, do:
(621) If INSTRUCTION may possibly read or write VARIABLE, then (622) add a 'variable sync' describing the possible reference or modification to INSTRUCTION.
(625) If INSTRUCTION may possibly read or write VARIABLE, and is also in ACTIVE_VARIABLES, then (626) add a 'write-back' copy operation just before INSTRUCTION to write VARIABLE back to its synchronization location, and (627) remove VARIABLE from ACTIVE_VARIABLES. Because at this stage of SSA conversion, only source variables are present (not SSA variables), then this write-back copy operation is represented by a copy from VARIABLE to itself ('VARIABLE : = VARIABLE') with a special flag set to indicate that the destination should not be SSA-converted.
(630) For each VARIABLE which is defined in INSTRUCTION, do:

Add VARIABLE to ACTIVE_VARIABLES and ALL_ACTIVE_VARIABLES (modifications to these variables are local to this function).
(650) For each block (430) immediately dominated by BLOCK, DOM, do:
(651) Recursively use add_syncs_and_write_backs on the dominated block DOM, with the local values of ACTIVE_VARIABLES and ALL_ACTIVE_VARIABLES passed as the respectively named parameters.

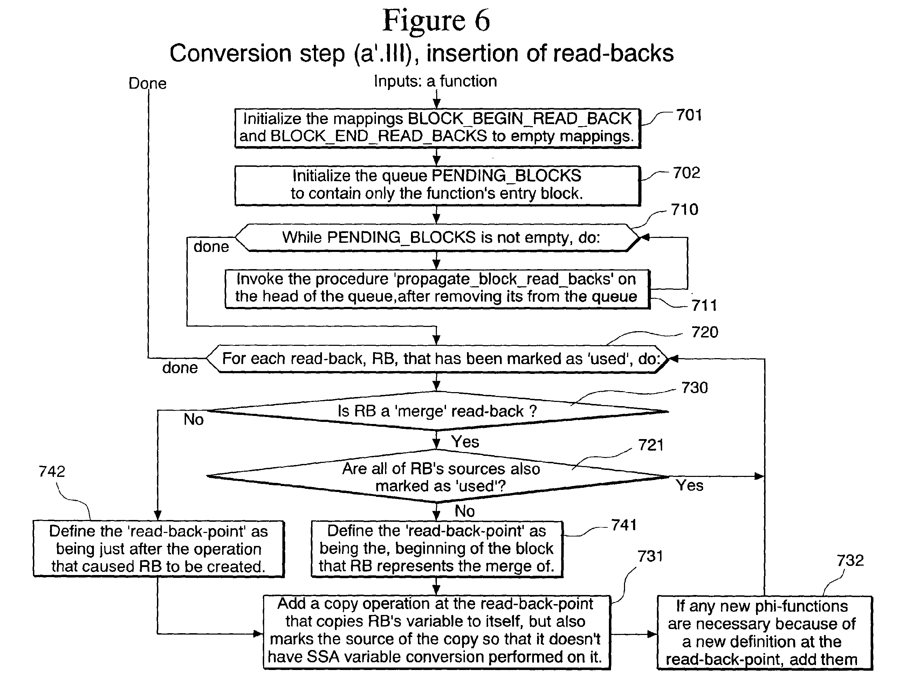

Step (a'.III) takes place as follows as shown in Figure 6.
(701) Initialize the mappings BLOCK_BEGIN_READ_BACKS and BLOCK_END_READ_BACKS to be empty. These mappings associate each block in the flow graph with a sets of read-backs.
(702) Initiaiize the queue PENDING_BLOCKS to the function's entry block.
(710) While PENDING_BLOCKS is not empty, (711) remove the first block (430) from it, and invoke the function 'propagate_block_read_backs' (800) on that block.
(720) For each read-back RB in any block (430) that has been marked as 'used', and (721) isn't a 'merge read-back' who's sources (the read-backs that it merges) are all also marked 'used', instantiate that read-back as follows:
(730) If RB is a 'merge read-back', then the point of read-back is (741) the beginning of the block (430) where the merge occurs, otherwise it is (742) immediately after the instruction (440) that created the read-back.
(731) Add a copy operation at the point of read-back that copies RB's variable from its synchronization location to an SSA variable (as noted above for adding write-back copy operations, because at this stage no SSA variable have actually been introduced, this copy operation simply copies from the variable to itself, but marks the source of the copy with a flag saying not to do SSA conversion).
(732) If necessary, introduce phi functions to merge the newly defined SSA variable with other definitions of the variable.

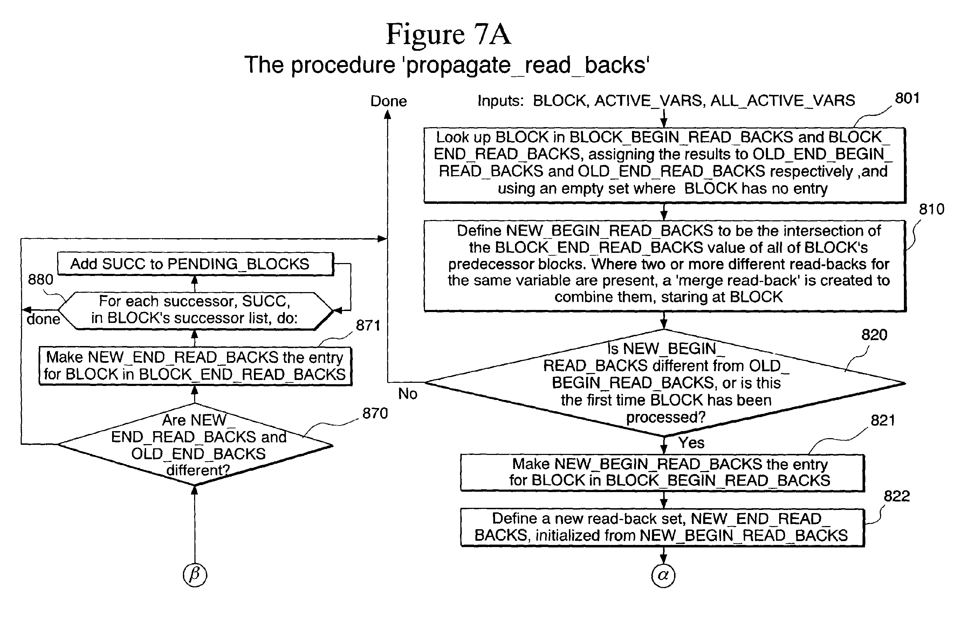

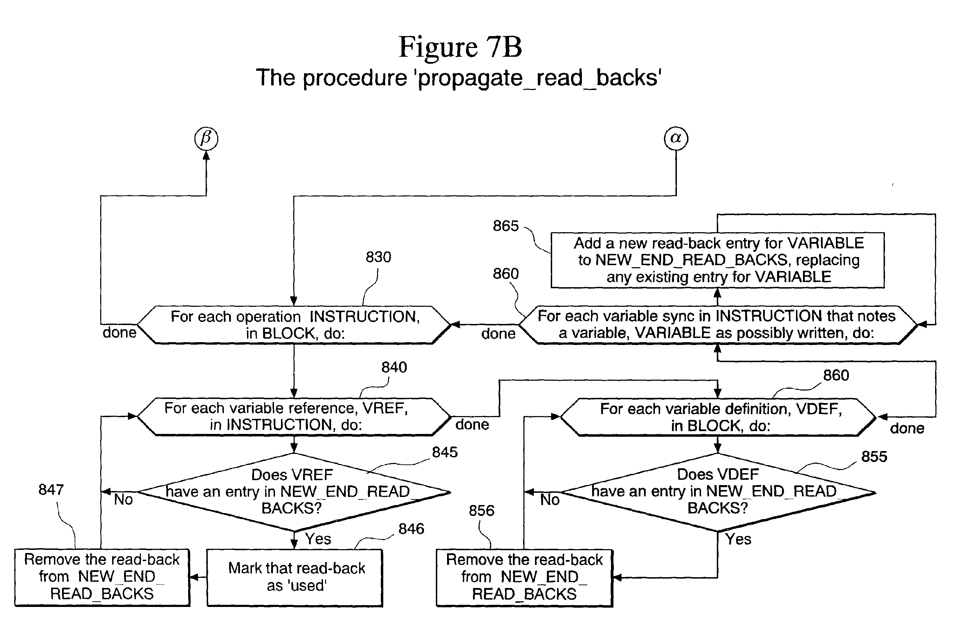

The function 'propagate_block_read_backs', with the parameter BLOCK, is defined as follows as shown in Figure 7.
(801) Look up BLOCK in BLOCK_BEGIN_READ_BACKS and BLOCK_END_READ_BACKS, assigning the associated read-back set with the local variables OLD_BEGIN_READ_BACKS and OLD_END_READ_BACKS respectively. If there is no entry for block in either case, add an appropriate empty entry for block.
(810) Calculate the intersection of the end read-back sets for each predecessor block (431) of BLOCK in the flow-graph, calling the result NEW_BEGIN_READ_BACKS. The intersection is calculated as follows:
   Any predecessor read-back for which a read-back of the same variable doesn't exist in one of the other predecessor blocks is discarded from the result; it is also marked as 'referenced'.
   If the read-back for a given viable is the same read-back in all predecessor blocks (431), that read-back is added to the result.
   If a given variable is represented by different real-backs in at least two predecessor blocks (431), a 'merge read-back' is created that references all the corresponding predecessor read-backs, and this merge read-back is added to the result.
(820) If NEW_BEGIN_READ_BACKS is different from OLD_BEGIN_READ_BACKS, or this is the first time this block has been processed, then:
(821) Add. NEW_BEGIN_READ_BACKS as the entry for BLOCK in BLOCK_BEGIN_READ_BACKS, replacing OLD_BEGIN_READ_BACKS.
(822) Initialize NEW_END_READ_BACKS from NEW_BEGIN_READ_BACKS.
(830) For each operation INSTRUCTION in BLOCK, do:
(840) For each variable reference VREF in INSTRUCTION, do:
(845) If VREF has an entry RB in NEW_END_READ_BACKS, then (846) Mark RB as used, and (847) remove it from NEW_END_READ_BACKS.
(850) For each variable definition VDEF in INSTRUCTION, do:
(855) If VDEF has an entry RB in NEW_END_READ_BACKS, then (856) remove RB from NEW_END_READ_BACKS.
(860) For each variable sync in INSTRUCTION that notes a variable VARIABLE as possibly written, do:
(865) Add a new read-back entry for VARIABLE to NEW_END_READ_BACKS, replacing any existing read-back of VARIABLE.
(870) If NEW_END_READ_BACKS is different from OLD_END_READ_BACKS, then;
(871) Add NEW_END_READ_BACKS as the entry for BLOCK in BLOCK_END_READ_BACKS, replacing OLD_END_READ_BACKS.
(880) Add each BLOCK's successors (432) to PENDING_BLOCKS.

(b) (130) Every non-SSA variable definition is replaced by a definition of a unique SSA-variable, and every non-SSA variable reference replaced by a reference to an appropriate SSA-variable, as described in [SSAFORM].

The exception to this rule is complex variables (452) that have been marked as special 'synchronization' locations, in the copy instruction (440) inserted in step (a'); they are left as-is, referring to the original complex variable (452).

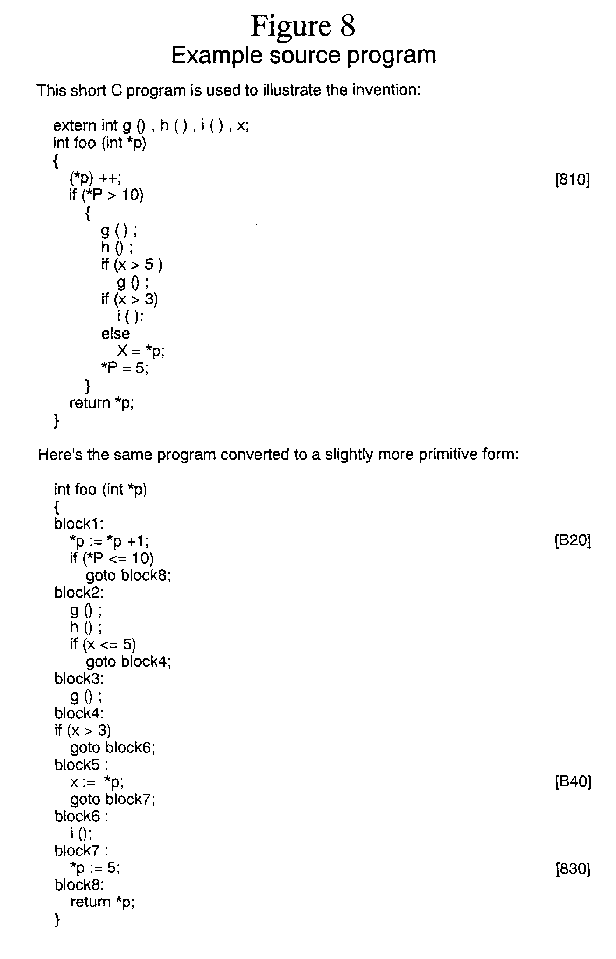

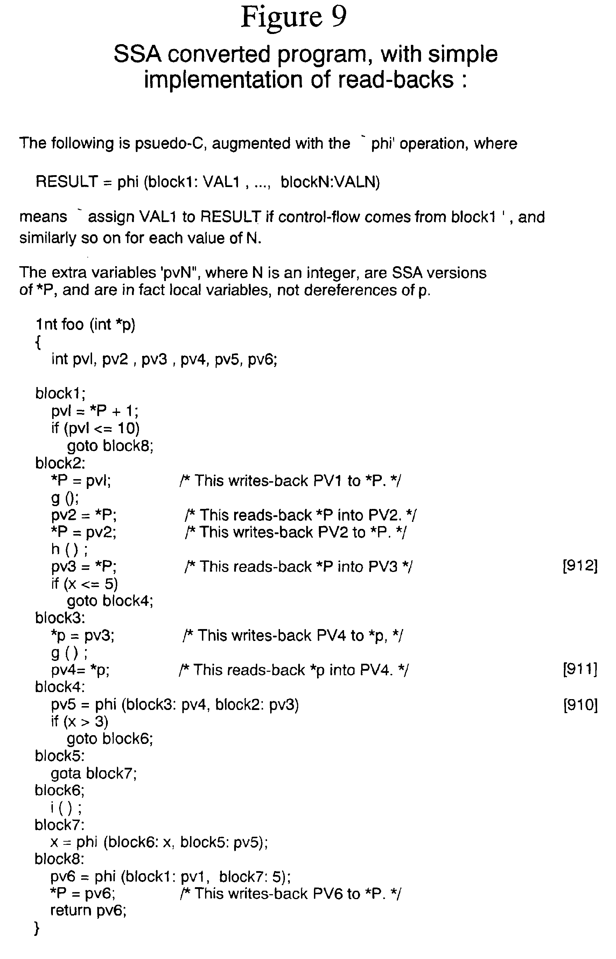

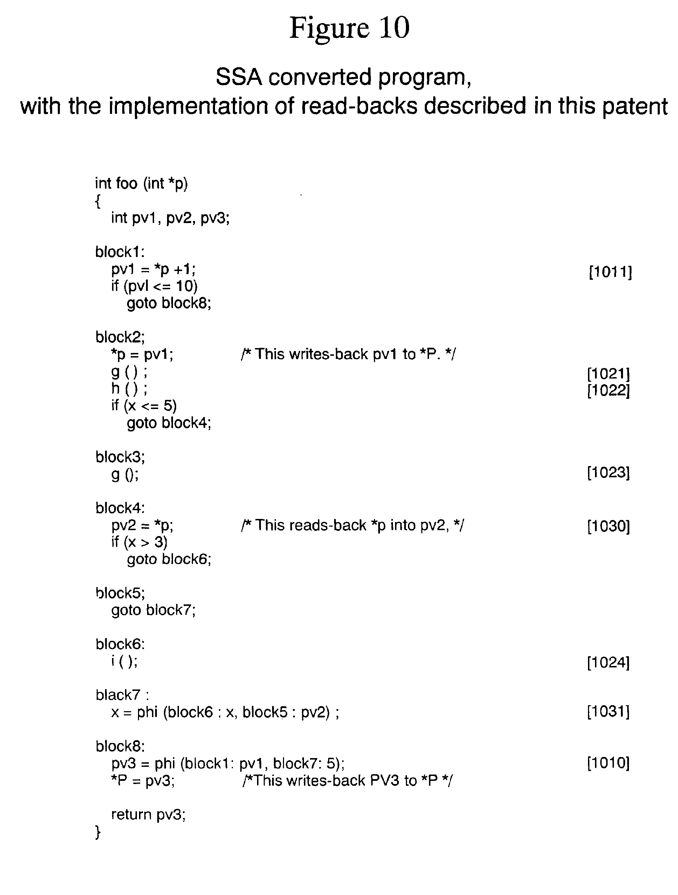

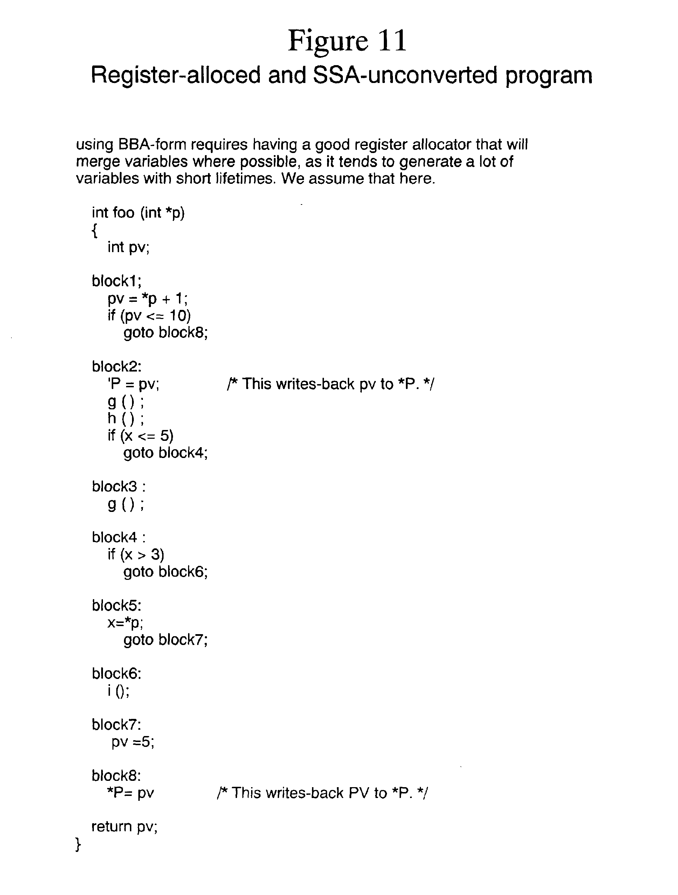

An example of a program being transformed into SSA form, with and without the use of this invention, can be found in Figures 8 - 11.

## Claims

1. A method for avoiding excessive overhead by a programmed computer while using a form of SSA (Static Singe Assignment) extended to use storage locations other than local variables, comprising the step of:
allowing a program to use a compiler representation known as SSA form on any memory location addressable by the program; SSA form is normally only usable on function local variables.

2. The method as claimed in claim 1, further comprising the steps of:
inserting phi functions at any place in the function where multiple definitions of a same non-SSA variable may be merged, the phi-functions producing a new definition of the variable at a point where they are inserted;
finding which operations may implicitly read or write complex variables that are in SSA form;
adding write-back copy operations at appropriate locations to write complex variables that are in SSA form, the write-back copy operations writing an SSA variable back to its real location;
adding read-back copy operations at appropriate locations to read possibly modified values back into new SSA definitions, the read-back; copy operations defining a new SSA variable from a variable's real location; and
replacing every non-SSA variable definition by a definition of a unique SSA-variable, and replacing every non-SSA variable reference by a reference to an appropriate SSA-variable.
